# EUROPEAN PATENT SPECIFICATION

(11) **EP 2 390 588 B1**
(45) Date of publication and mention of the grant of the patent: **14.09.2016**
(21) Application number: 11158501.4
(22) Date of filing: 16.03.2011
(51) Int. Cl.: F24D 11/02, F24D 17/02, F24D 19/10, F25B 30/02, F24F 5/00

(54) **Hot water supply device with heat pump**
Heißwasserversorgungsvorrichtung mit einer Wärmepumpe
Dispositif d'alimentation en eau chaude avec une pompe à chaleur

(30) Priority: 28.05.2010 KR 20100050321
(43) Date of publication of application: 30.11.2011
(73) Proprietor: LG Electronics Inc., Seoul 150-721 (KR)
(72) Inventor: Kim, Byungsoon, Changwon-si 641-711 (KR); Koo, Jahyung, Changwon-si 641-711 (KR); Kwon, Kyongmin, Changwon-si 641-711 (KR)
(74) Representative: Vossius & Partner Patentanwälte Rechtsanwälte mbB

(56) References cited:
- EP-A2- 0 431 760
- JP-A- 2008 249 248
- KR-A- 20030 053 984

## Description

### 1. Field of the Invention

The present invention relates to a hot water supply device associated with a heat pump to supply hot water.

### 2. Description of the Related Art

In general, a hot water supply device uses a heating source to heat water and supply the heated water to a user. In this case, a device using a heat pump to heat water and supply the heated water to a user can be referred to as a hot water supply device associated with a heat pump.

The hot water supply device associated with the heat pump includes a water supply passage for supplying water, a water storage part for storing the water supplied through the water supply passage, a heating source for heating the supplied water, and a water discharge passage for supplying the heated water to a user.

The heat pump includes a compressor compressing a refrigerant, a condenser in which the refrigerant discharged from the compressor is condensed, an expander in which the refrigerant passing through the condenser is expanded, an evaporator in which the refrigerant expanded through the expander is evaporated, and a refrigerant pipe connecting the compressor, the condenser, the expander, and the evaporator to form a refrigerant cycle.

While the refrigerant flows in the heat pump, the refrigerant absorbs heat in the evaporator and emits heat in the condenser. The refrigerant transmits heat to the water in the hot water supply device, so that the hot water supply device can perform a hot water supply operation.

JP 2008 249248 A relates to a heat pump type water supply system capable of continuing a cooling operation without switching a refrigerant flow channel in a heat pump cycle.

KR 2003 0053984 A relates to a a high temperature quick boiling heat pump unit provided to stably supply warm water and hot water even in winter.

### SUMMARY OF THE INVENTION

The present invention provides a hot water supply device associated with a heat pump as defined in claim 1, which can minimize degradation due to an outdoor condition variation and continuously perform a hot water supply operation and a heating operation without a defrosting operation. The hot water supply device associated with a heat pump and using the heat pump to perform a hot water supply operation includes: a compressor compressing a refrigerant; a condenser in which the refrigerant discharged from the compressor is condensed; an expander in which the refrigerant passing through the condenser is expanded; an evaporator in which the refrigerant passing through the expander is evaporated; and wherein refrigerants of the condenser and the evaporator are heat-exchanged with water to continuously perform the hot water supply operation without a defrosting operation. Therefore, acoording to the present invention, degradation due to the variation in an outdoor condition such as outdoor temperature can be minimized and defrosting operation is unnecessary, and the hot water supply operation and the heating operation can be continuously performed.

### BRIEF DESCRIPTION OF THE DRAWINGS

Fig. 1 is a schematic view illustrating a hot water supply device associated with a heat pump, according to a first embodiment.
Fig. 2 is a block diagram illustrating a flow of a control signal of a hot water supply device associated with a heat pump, according to an embodiment.
Fig. 3 is a flowchart illustrating a control flow when a hot water supply device associated with a heat pump is in a freezing and bursting prevention operation, according to an embodiment.
Fig. 4 is a schematic view illustrating a circulation of heat source side water in a hot water supply device associated with a heat pump, according to an embodiment.
Fig. 5 is a flowchart illustrating a control flow when a hot water supply device associated with a heat pump is in a water saving operation, according to an embodiment.
Fig. 6 is a schematic view illustrating a hot water supply device associated with a heat pump, according to a second embodiment.
Fig. 7 is a schematic view illustrating a hot water supply device associated with a heat pump, according to a third embodiment.
Fig. 8 is a schematic view illustrating a hot water supply device associated with a heat pump, according to a fourth embodiment.
Fig. 9 is a schematic view illustrating a hot water supply device associated with a heat pump, according to a fifth embodiment.
Fig. 10 is a schematic view illustrating a hot water supply device associated with a heat pump, according to a sixth embodiment.

### DETAILED DESCRIPTION OF THE EMBODIMENTS

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope of the invention. To avoid detail not necessary to enable those skilled in the art to practice the invention, the description may omit certain information known to those skilled in the art. The following detailed description is, therefore, not to be taken in a limiting sense, and the scope of the present invention is defined only by the appended claims.

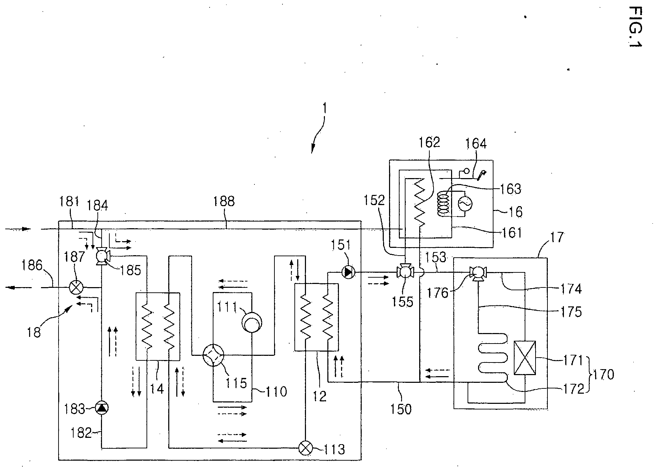

FIG. 1 is a configuration diagram of a first embodiment of a water circulation system associated with a refrigerant cycle according to the present invention.

Referring to FIG. 1, the water circulation system S associated with the refrigerant cycle includes a first refrigerant circulation unit where first refrigerant exchanging heat with outdoor air flows to perform the refrigerant cycle, a second refrigerant circulation unit where a second refrigerant exchanging heat with the first refrigerant flows to perform the refrigerant cycle, and a water circulation unit where water for at least one of indoor heating/cooling and hot water supplying. At this time, the refrigerant cycle means transmitting the heat by repetitively performing compression, condensation, expansion, and evaporation processes.

In addition, the water circulation system S associated with the refrigerant cycle includes an outdoor unit 1 where Fig. 1 is a schematic view illustrating a hot water supply device associated with a heat pump, according to a first embodiment.

Referring to Fig. 1, a hot water supply device 1 associated with a heat pump includes a compressor 111 compressing a refrigerant, a condenser in which the refrigerant discharged from the compressor 111 is condensed, an expander 113 in which the refrigerant discharged from the condenser is expanded, and an evaporator in which the refrigerant discharged from the expander 113 is evaporated.

The hot water supply device 1 includes the compressor 111, a usage side heat exchanger 12 using the refrigerant to perform a hot water supply operation and an indoor heating/cooling operation, the expander 113, and a heat source side heat exchanger 14 in which the refrigerant absorbs and emits heat from and to a heat source. The heat source is an object from and to which refrigerant absorbs and emits heat, and denotes water in a water supply part to be described later.

The usage heat exchanger 12 and the heat source heat exchanger 14 may function as condensers or evaporators according to operation conditions. In detail, in a heating operation, the usage heat exchanger 12 may be used as a condenser and the heat source heat exchanger 14 may be used as an evaporator, and, in a cooling operation, the usage heat exchanger 12 may be used as an evaporator, and the heat source heat exchanger 14 may be used as a condenser.

The hot water supply device 1 further includes a flow switch part 115 switching a flow direction of the refrigerant discharged from the compressor 111 to one of the usage heat exchanger 12 and the heat source heat exchanger 14, and a refrigerant pipe 110 connecting the compressor 111, the flow switch part 115, the usage heat exchanger 12, the expander 113, and the heat source heat exchanger 14 to form a refrigerant cycle.

The refrigerants flowing through the condenser and the evaporator are heat-exchanged with water. That is, heat is exchanged between refrigerant and water at both the heat source side heat exchanger 14 and the usage side heat exchanger 12. That is, the usage side heat exchanger 12 and the heat source side heat exchanger 14 are provided as a water refrigerant heat exchanger exchanging heat between the refrigerant and water. Thus, since a defrosting operation of the heat exchangers 12 and 14 is not required, the hot water supply operation and the heating operation can be continuously performed.

The hot water supply device 1 further includes a water pipe 150 in which water heat-exchanged with the refrigerant in the usage heat exchanger 12 flows, a usage side pump 151 forcibly moving the water in the water pipe 150, a hot water supply part 16 using the water heated by the refrigerant in the usage side heat exchanger 12 to supply the heated water, and an heating/cooling part 17 using the water heat-exchanged with the refrigerant in the usage side heat exchanger 12 to perform a heating/cooling operation.

In detail, the water pipe 150 is connected to the usage side heat exchanger 12 to move water heat-exchanged with the refrigerant in the usage side heat exchanger 12. The water pipe 130 forms a closed loop circuit such that water heat-exchanged with the refrigerant in the usage side heat exchanger 12 returns to the usage side heat exchanger 12 through the hot water supply part 16 or the heating/cooling part 17. That is, water passing through the usage side heat exchanger 12 circulates to pass through the hot water supply part 16 or the heating/cooling part 17 along the water pipe 150. The usage side pump 151 is installed on a side of the water pipe 150 to forcibly move water in the water pipe 150.

The hot water supply part 16 heats and supplies water, e.g., for face-washing or dish-washing. In detail, the hot water supply part 16 includes a hot water supply tank 161 storing water supplied from the outside and heating the stored water, a hot water supply heat exchanger 162 exchanging heat between water passing through the usage side heat exchanger 12 and water of the hot water supply tank 161, an auxiliary heater 163 disposed in the hot water supply tank 161, and a water discharge passage 164 supplying hot water from the hot water supply tank 161 to a user.

The hot water supply heat exchanger 162 may be configured in any shape provided that water of the hot water supply tank 161 can be heated by water flowing in the water pipe 150, for example, at least one portion of the water pipe 150 may be accommodated in the hot water supply tank 161.

The heating/cooling part 17 includes an indoor heat exchanger 170 that is adjacent to an indoor space to exchange heat between the second refrigerant and the indoor space. In more detail, the indoor heat exchanger 170 includes an air-conditioning heat exchanger 171 in which heat is exchanged between indoor air and the second refrigerant, and a bottom heat exchanger 172 in which heat is exchanged between an indoor bottom and the second refrigerant.

The air-conditioning heat exchanger 171 may be any device such as a fan coil unit in which heat can be exchanged between water and indoor air. The bottom heat exchanger 172 may be configured in any shape provided that heat can be exchanged between water and the indoor bottom, for example, at least one portion of the water pipe 150 is installed in the indoor bottom.

The hot water supply part 16 may be connected to the heating/cooling part 17 in parallel on the water pipe 150. In more detail, the water pipe 150 includes a hot water supply pipe 152 branched from a discharge side of the usage side heat exchanger 12 and joining an introduction side of the usage side heat exchanger 12, and a heating/cooling water pipe 153. The hot water supply part 16 is installed on the hot water supply pipe 152, and the heating/cooling part 17 is installed on the heating/cooling water pipe 153. A point of the water pipe 150 from which the hot water supply pipe 152 and the heating/cooling water pipe 153 are branched may be provided with an usage side three-way valve 155 switching a flow direction of water such that water passing through the usage side heat exchanger 12 is selectively introduced to one of the hot water supply part 16 and the heating/cooling part 17.

The air-conditioning heat exchanger 171 may be connected to the bottom heat exchanger 172 in parallel on the water pipe 150. In more detail, the heating/cooling water pipe 153 includes an air-conditioning water pipe 174 and a bottom water pipe 175, which are branched from each other. The air-conditioning heat exchanger 171 is installed on the air-conditioning water pipe 174, and the bottom heat exchanger 172 is installed in the bottom water pipe 175. A point of the heating/cooling water pipe 153 where the air-conditioning water pipe 174 and the bottom water pipe 175 are branched from each other may be provided with a heating/cooling side three-way valve 176 switching a flow direction of water such that water introduced into the bottom water pipe 175 is selectively introduced to one of the air-conditioning heat exchanger 171 and the bottom heat exchanger 172.

The hot water supply device 1 further includes a water supply part 18 in which water to be heat-exchanged with the refrigerant in the heat source side heat exchanger 14 flows. The water supply part 18 includes a water supply passage 181 connected to a water supply source, a circulation passage 182 in which water to be heat-exchanged with the refrigerant in the heat source side heat exchanger 14 circulates, a circulation side pump 183 forcibly moving water in the circulation passage 182, a circulation side supply passage 184 supplying water to the circulation passage 182, a water supply adjustment part 185 selectively preventing a water supply through the circulation side supply passage 184, a circulation side discharge passage 186 discharging water circulating in the circulation passage 182, and a water discharge adjustment part 187 selectively preventing a water discharge through the circulation side discharge passage 186.

Since the heat source side heat exchanger 14 is simultaneously connected to the circulation passage 182 and the refrigerant pipe 110, heat is exchanged in the heat source heat exchanger 14 between water flowing in the circulation passage 182 and the refrigerant flowing in the refrigerant pipe 110.

The water supply passage 181 is connected to a water supply source capable of continually supplying water, such as a water-supply facility. The circulation side supply passage 184 connects the water supply passage 181 to the circulation passage 182 to supply water from the water supply source to the circulation passage 182. The water supply adjustment part 185 is installed on the circulation side supply passage 184 to selectively prevent a water supply to the circulation passage 182.

The circulation side discharge passage 186 is branched from a side of the circulation passage 182 to guide water flowing in the circulation passage 182 to the outside. The water discharge adjustment part 187 is installed on the circulation side discharge passage 186 to selectively prevent a water discharge from the circulation passage 182 to the outside.

The circulation side pump 183 is installed on a side of the circulation passage 182 to forcibly circulate water in the circulation passage 182.

The hot water supply device 1 further includes a hot water supply side supply passage 188 to supply water to the hot water supply part 16. The hot water supply side supply passage 188 connects the water supply passage 181 to the hot water supply part 16 to supply water from the water supply source to the hot water supply part 16. In more detail, the hot water supply side supply passage 188 connects the water supply passage 181 to the hot water supply tank 161 to guide water from the water supply source to the hot water supply tank 161 through the water supply passage 181 and the hot water supply side supply passage 188.

Since the circulation side supply passage 184 and the hot water supply side supply passage 188 are simultaneously connected to the water supply passage 181 and the water supply source, water can be simultaneously supplied from the water supply source to the circulation passage 182 and the hot water supply part 16 through the circulation side supply passage 184 and the hot water supply side supply passage 188. That is, water flowing in the circulation passage 182 and water stored and heated in the hot water supply part 16 are supplied from the same water supply source.

Hereinafter, flows of water and refrigerant in a hot water supply device associated with a heat pump will be described in detail with reference to the accompanying drawings, according to the present disclosure.

Referring to Fig. 1, when the hot water supply device 1 is in a hot water supply or heating operation, the refrigerant discharged from the compressor 111 is introduced to the usage side heat exchanger 12. The refrigerant passing through the usage side heat exchanger 12 heats the usage side water and is condensed. The refrigerant going out of the usage side heat exchanger 12 is expanded through the expander 113, and then, is introduced into the heat source side heat exchanger 14. The refrigerant introduced to the heat source side heat exchanger 14 absorbs heat from water in the heat source, and is evaporated. The refrigerant going out of the heat source side heat exchanger 14 is introduced again to the compressor 111. At this point, the flow switch part 115 communicates the refrigerant pipe 110 at the discharge side of the compressor 111 with the refrigerant pipe 110 at the introduction side of the usage side heat exchanger 12, and maintains a communication state of the refrigerant pipe 110 at the discharge side of the heat source side heat exchanger 14 with the refrigerant pipe 110 at the introduction side of the compressor 111.

Next, water discharged from the usage side pump 151 can be introduced to the hot water supply part 16 or the heating/cooling part 17. At this point, the usage side three-way valve 155 introduces the water to the hot water supply part 16 in the hot water supply operation, and introduces the water to the heating/cooling part 17 in the heating operation.

Water introduced to the hot water supply part 16 flows in the hot water supply heat exchanger 162 along the water pipe 150 at the hot water supply side and heats water stored in the hot water supply tank 161, and then, is discharged from the hot water supply part 16. The water discharged from the hot water supply part 16 passes through the usage side heat exchanger 12 along the water pipe 150 at the usage side and is heated to a high temperature by the refrigerant, and then, is introduced again to the usage side pump 151, and thus, the water can continuously circulate.

The water introduced to the heating/cooling part 17 is introduced along the heating/cooling water pipe 153 to the indoor heat exchanger 170. In more detail, the water introduced to the heating/cooling part 17 can be selectively introduced to one of the air-conditioning heat exchanger 171 and the bottom heat exchanger 172 by the heating/cooling side three-way valve 176. The water introduced to the air-conditioning heat exchanger 171 heats indoor air, and the water introduced to the bottom heat exchanger 172 heats the indoor bottom. The water passing through one of the air-conditioning heat exchanger 171 and the bottom heat exchanger 172 is introduced to the usage side heat exchanger 12 along the water pipe 150 at the usage side. The water passing through the usage side heat exchanger 12 is heated by the refrigerant, and then, is introduced again to the usage side pump 151, and thus, the water can continuously circulate.

Water from the water supply source is introduced through the water supply passage 181 and the circulation side supply passage 184 to the circulation passage 182. At this point, the water supply adjustment part 185 maintains the communication state of the circulation side supply passage 184 with the circulation passage 182. The water introduced to the circulation passage 182 passes through the heat source side heat exchanger 12 and heats the refrigerant, and then, is discharged through the circulation side pump 183 and the circulation side discharge passage 186 to the outside.

At this point, the water at the heat source side is forcibly circulated by the circulation side pump 183. However, for example, when the water supply source such as a water supply facility has its own pressure, the pressure of the water supply source without the circulation side pump 183 may move the water in the circulation passage 182.

However, a freezing and bursting prevention operation and a water saving operation may be performed during a heating or cooling operation as described later. When at least one of the freezing and bursting prevention operation and the water saving operation is performed, water may flow in the circulation passage 182 along the circulation passage 162 in the state where a water supply and a water discharge from the circulation passage 182 is prevented. In this case, the circulation side pump 183 is necessary.

When the hot water supply device 1 is in the cooling operation, a flow direction of the refrigerant is changed. In more detail, the refrigerant discharged from the compressor 111 moves sequentially through the heat source side heat exchanger 14, the expander 113, and the usage side heat exchanger 12, and then, is introduced again to the compressor 111. The water flow at the heat source side is the same as that in the heating operation, and the water at the usage side circulates through the heating/cooling part 17 and the usage side heat exchanger 12. The hot water supply device 1 may perform only both the heating operation and the hot water supply operation.

The hot water supply device 1 can improve installation characteristics since the refrigerants passing through the condenser and the evaporator on the refrigerant cycle are heat-exchanged with water.

In more detail, both the condenser and the evaporator may be provided as water refrigerant heat exchangers in which heat is exchanged between water and the refrigerants. In general, since a heat exchange density between water and refrigerant is higher than a heat exchange density between air and refrigerant, the volume of a water refrigerant heat exchanger may be smaller than the volume of air refrigerant heat exchanger for the same heat exchange capacity. Therefore, the water refrigerant heat exchanger takes a relatively small installation space, and thus, can be installed in a relatively small space. Thus, the installation space of the hot water supply device 1 can be minimized.

In addition, the water refrigerant heat exchanger can be installed in indoor and outdoor spaces. Thus, the usage side heat exchanger 12 and the heat source side heat exchanger 101, which function as the condenser and the evaporator, can be installed in any space.

Thus, the installation characteristics of the hot water supply device 1 can be improved.

In addition, the hot water supply device 1 can minimize degradation due to an outdoor condition variation. In more detail, since water has a higher specific heat than air, water is relatively small affected by outdoor temperature. Thus, heat source side water, that is, circulation water is less in temperature variation than outside air. Thus, degradation due to the variation in an outdoor condition such as the outdoor temperature can be minimized.

In addition, in both the condenser and the evaporator, heat is exchanged between water and refrigerant, and thus, frost is prevented from forming on the surfaces of the usage side heat exchanger 12 and the heat source side heat exchanger 14. Thus, a defrosting operation is unnecessary, and the hot water supply operation and the heating operation can be continuously performed.

Furthermore, since a fan for forcibly moving outdoor air is unnecessary, a noise can be further reduced during an operation.

Hereinafter, a freezing and bursting prevention operation and a water saving operation of a hot water supply device associated with a heat pump will be described in detail with reference to the accompanying drawings, according to the present disclosure.

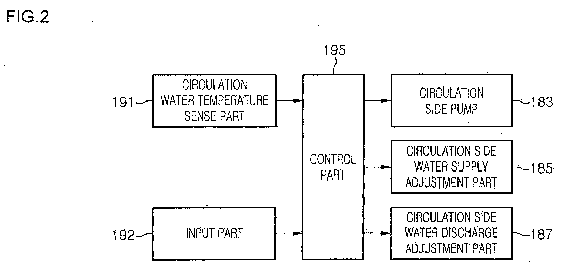

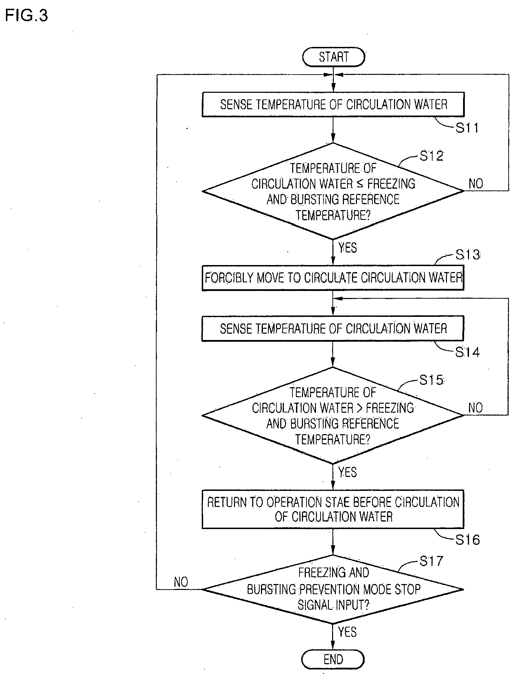

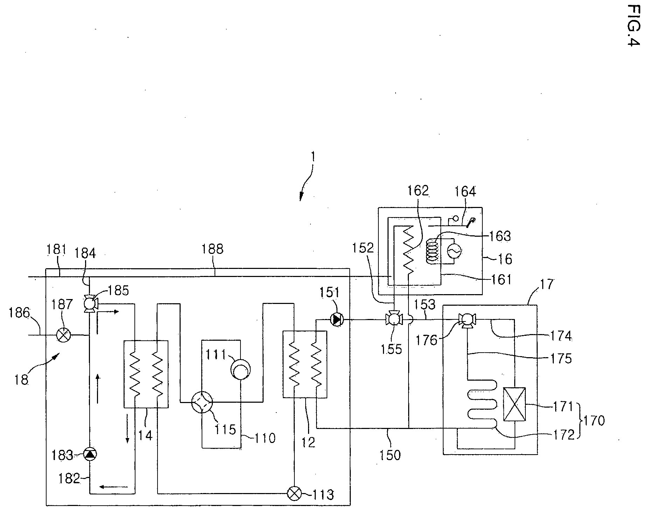

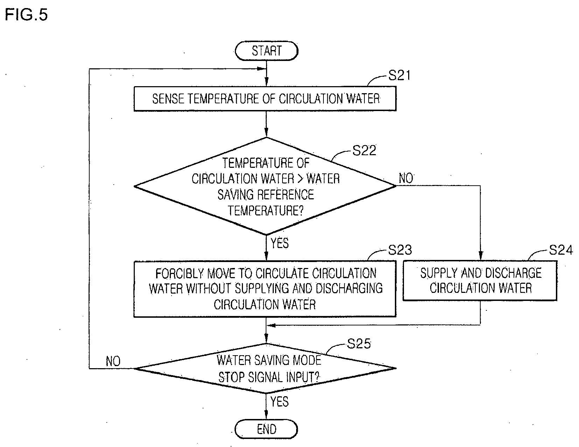

Fig. 2 is a block diagram illustrating a flow of a control signal of a hot water supply device associated with a heat pump, according to an embodiment, and Fig. 3 is a flowchart illustrating a control flow when a hot water supply device associated with a heat pump is in a freezing and bursting prevention operation, according to an embodiment. Fig. 4 is a schematic view illustrating a circulation of heat source side water in a hot water supply device associated with a heat pump, according to an embodiment, and Fig. 5 is a flowchart illustrating a control flow when a hot water supply device associated with a heat pump is in a water saving operation, according to an embodiment.

Referring to Fig. 2, the hot water supply device 1 further includes a circulation water temperature sense part 191 for sensing the temperature of heat source side water, that is, the temperature of circulation water, an input part 192 for inputting various signals for an operation control, and a control part 195 controlling the operation of the circulation side pump 183, the operation of the water supply adjustment part 185 at the circulation side, and the operation of the water discharge adjustment part 187 at the circulation side according to a temperature sensed by the circulation water temperature sense part 191 or a signal input by the input part 192. The circulation water temperature sense part 191, the input part 192, the control part 195, the circulation side pump 183, the water supply adjustment part 185, and the water discharge adjustment part 187 are electrically connected to one another to transmit and receive control signals.

The circulation water temperature sense part 191 may be installed at a side on the circulation passage 182 to sense the temperature of water flowing in the circulation passage 182. The input part 192 may be provided, for example, to the heating/cooling part 17, a side of the hot water supply part 16, or a remote control such that a user can easily input a signal.

Referring to Fig. 3, when the hot water supply device 1 is in the freezing and bursting prevention operation, the temperature of the circulation water is sensed first in operation S11. At this point, the temperature of the circulation water can be sensed by the circulation water temperature sense part 191.

Next, if the temperature of the circulation water is greater than a freezing and bursting reference temperature in operation S12, the process in which the temperature of the circulation water is sensed in operation S11 and is compared with the freezing and bursting reference temperature is repeated.

However, if the temperature of the circulation water is equal to or less than the freezing and bursting reference temperature in operation S12, the circulation water is forcibly moved to circulate through the circulation passage 182. At this point, the circulation water can be forcibly moved by the circulation side pump 183. The freezing and bursting reference temperature denotes a threshold temperature at which circulation water may be frozen. For example, the freezing and bursting reference temperature may be 0°C.

Referring to Fig. 4, the circulation water circulates through the circulation passage 182. First, water discharged from the circulation side pump 183 flows along the circulation passage 182 and is introduced to the heat source side heat exchanger 14. Then, the circulation water passing through the heat source side heat exchanger 14 heats the refrigerant, and then, is introduced again to the circulation side pump 183, and thus, the water can continuously circulate along the circulation passage 182.

The water discharge adjustment part 187 closes the circulation side discharge passage 186 to prevent the water discharge of the circulation passage 182, and the water supply adjustment part 185 closes the circulation side supply passage 184 to prevent the water supply of the circulation passage 182. Thus, the circulation water circulates in a closed loop along the circulation passage 182. Thus, even when the temperature of the circulation water is equal to or less than the freezing and bursting reference temperature, freezing of the circulation water can be minimized and delayed.

Next, the temperature of the circulation water is sensed again in operation S14. Then, if the temperature of the circulation water is equal to or less than the freezing and bursting reference temperature in operation S15, the process in which the temperature of the circulation water is sensed in operation S14 and is compared with the freezing and bursting reference temperature is repeated.

However, if the temperature of the circulation water is greater than the freezing and bursting reference temperature in operation S15, a state before the circulation of the circulation water returns in operation S14. For example, if the hot water supply device 1 is stopped before the circulation water circulates to prevent freezing and bursting, when the temperature of the circulation water after the circulation water circulates is over the freezing and bursting reference temperature, the state where the hot water supply device 1 is stopped returns.

After the state before the circulation of the circulation water returns, the temperature of the circulation water is sensed in operation S11 until a signal for stopping the freezing and bursting prevention operation is input in operation S17.

Referring to Fig. 5, when the hot water supply device 1 is in the water saving operation, the temperature of the circulation water is sensed first in operation S21.

Then, if the temperature of the circulation water is over a water saving reference temperature in operation S22, the circulation water circulates through the circulation passage 182 in the state where a supply and a discharge of the circulation water is prevented in operation S23.

At this point, the water saving reference temperature denotes the minimum temperature value of the circulation water within a range where a heating performance and a hot water supply performance can be satisfied. In more detail, when the hot water supply device 1 is in the heating and hot water supply operations, the circulation water heats the refrigerant through the heat source side heat exchanger 14, and thus, the temperature of the circulation water continually decreases. Then, the temperature difference between the refrigerant and the circulation water passing through the heat source side heat exchanger 14 is reduced, so that the heating performance and the hot water supply performance may be degraded. In this case, a minimum comfortable heating performance and a minimum comfortable hot water supply performance for a user can be determined, and a minimum temperature of the circulation water can be determined such that a heating performance and a hot water supply performance are equal to or greater than the minimum comfortable heating performance and the minimum comfortable hot water supply performance. That is, when the temperature of the circulation water is over the water saving reference temperature, the heating performance and the hot water supply performance can be maintained within a range where a user feels comfortable.

However, if the temperature of the circulation water is equal to or less than the water saving reference temperature in operation S22, the circulation water is supplied and discharged in operation S24. That is, since the water supply adjustment part and the water discharge adjustment part open the circulation side supply passage 184 and the circulation side discharge passage 186, water from the water supply source is supplied to the circulation passage 182, and simultaneously, the circulation water is discharged from the circulation passage 182 to the outside.

At this point, the circulation water circulating through the circulation passage 182 is discharged, and new circulation water can circulate through the circulation passage 182. The temperature of the new circulation water introduced to the circulation passage 182 is higher than that of the previous one discharged after circulating through the circulation passage 182. Thus, the temperature of the circulation water can be maintained to be over the water saving reference temperature. That is, the heating performance and the hot water supply performance can be maintained within a range where a user feels comfortable.

Finally, if a signal for stopping the water saving operation is not input in operation S25, the temperature of the circulation water is sensed again in operation S21.

The water saving operation can save water flowing in the circulation passage 182. In more detail, if the temperature of the circulation water is over the water saving reference temperature, the circulation water circulates through the circulation passage 182 without a supply and a discharge of the circulation water, so that an amount of consumed circulation water per time is reduced. If the temperature of the circulation water is equal to or less than the water saving reference temperature, the circulation water is supplied and discharged, so that the temperature of the circulation water circulating through the circulation passage 182 can be maintained to be over the water saving reference temperature. Thus, the amount of water flowing through the circulation passage 162 can be minimized, and simultaneously, the heating performance and the hot water supply performance can be maintained.

When the hot water supply device 1 is in the cooling operation, if the temperature of the circulation water does not reach a reference temperature, the circulation water is circulated through the circulation passage 182, and thus, water can be saved, and simultaneously, the cooling performance can be maintained. At this point, the reference temperature denotes the maximum temperature value of the circulation water within a range where a required cooling performance can be satisfied.

The freezing and bursting prevention operation can be performed when the hot water supply device 1 is stopped. The water saving operation may be performed simultaneously with the hot water supply operation, the heating operation, or the cooling operation.

Hereinafter, a hot water supply device associated with a heat pump will be described in detail with reference to the accompanying drawings, according to a second embodiment. The current embodiment is different from the first embodiment in that refrigerant may be excessively cooled. In the current embodiment, a description of the same configuration as that of the first embodiment will be omitted.

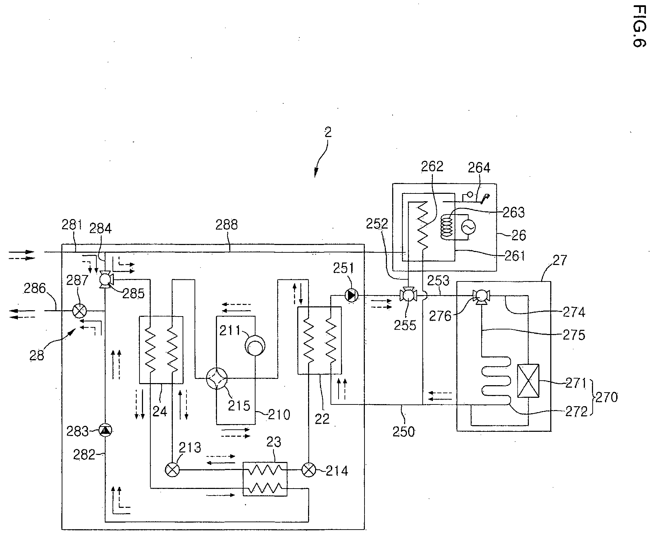

Fig. 6 is a schematic view illustrating a hot water supply device associated with a heat pump, according to the second embodiment.

Referring to Fig. 6, an excessive cooler is further provided.

In detail, the excessive cooler 23 is installed between an usage side heat exchanger 22 and an expander 213 on a refrigerant cycle. The excessive cooler 23 is installed at a point corresponding to a discharge side of a heat source side heat exchanger 24 on a circulation passage 282. The excessive cooler 23 may be configured as a water refrigerant heat exchanger accommodating a water passage and a refrigerant passage that are adjacent to each other to exchange heat between water and refrigerant.

Thus, when a hot water supply device 2 associated with a heat pump, according to the second embodiment, is in a heating operation, the refrigerant heating usage side water through the usage side heat exchanger 22 and condensed can heat heat source side water, that is, circulation water through the excessive cooler 23 and be excessively cooled.

Water, which heats refrigerant through the heat source side heat exchanger 24 and is cooled, can be heated by absorbing heat from refrigerant through the excessive cooler 23. Thus, when the hot water supply device 2 is in a water saving operation, a temperature decrease rate of the circulation water can be decreased. That is, since circulation time of the circulation water may further increase in the water saving operation, the amount of saved water can further increase as a whole, and a water saving effect can be further improved.

A cooling expander 213 may be installed between the excessive cooler 23 and the usage side heat exchanger 22. When the hot water supply device 2 is in a cooling operation, the expander 213 is completely opened, and the refrigerant passes through the excessive cooler 23 and expanded in the cooling expander 213, and thus, the refrigerant condensed through the heat source side heat exchanger 24 emits heat to the heat source side water in the excessive cooler 23 and can be excessively cooled.

Hereinafter, a hot water supply device associated with a heat pump will be described in detail with reference to the accompanying drawings, according to a third embodiment. The current embodiment is different from the first embodiment in that an air-conditioning heat exchanger is connected onto a refrigerant pipe. In the current embodiment, a description of the same configuration as that of the first embodiment will be omitted.

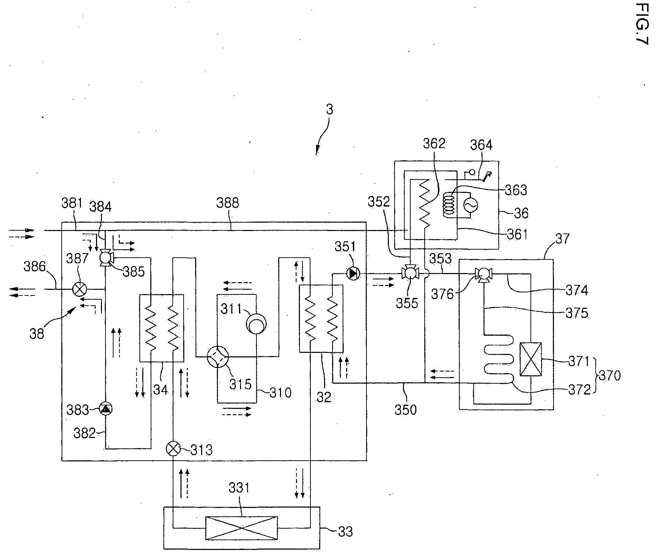

Fig. 7 is a schematic view illustrating a hot water supply device associated with a heat pump, according to the third embodiment.

Referring to FIG. 7, in the current embodiment, an air-conditioning heat exchanger 331 is connected to a side on a refrigerant pipe 310. That is, a refrigerant flowing through the air-conditioning heat exchanger 331 heats or cools indoor air to perform a heating or cooling operation.

In more detail, the air-conditioning heat exchanger 331 is installed between an usage side heat exchanger 32 and an expander 313 on a refrigerant cycle. Thus, when a hot water supply device 3 associated with a heat pump, according to the third embodiment, is in the heating operation, the refrigerant discharged from the usage side heat exchanger 32 heats indoor air through the air-conditioning heat exchanger 331 to heat an indoor space.

When the hot water supply device 3 is in the cooling operation, the refrigerant passing through a heat source side heat exchanger 34 is expanded through an expander 313, and then, cools indoor air through the air-conditioning heat exchanger 331 to cool the indoor space.

The air-conditioning heat exchanger 331 to be exposed to the indoor air may be accommodated in an indoor device disposed at a side of the indoor space.

According to the current embodiment, a heating performance and a cooling performance can be improved. In more detail, in the current embodiment, the indoor air can be directly heated or cooled using the refrigerant, and thus, a heat transfer amount between the refrigerant and the indoor air can be increased than a method in which indoor air is heated or cooled using water heated or cooled by refrigerant. Thus, the heating performance and the cooling performance can be improved.

Hereinafter, a hot water supply device associated with a heat pump will be described in detail with reference to the accompanying drawings, according to a fourth embodiment. The current embodiment is different from the first embodiment in that a hot water supply part and a bottom heating/cooling part are provided using a desuperheater method. In the current embodiment, a description of the same configuration as that of the first embodiment will be omitted.

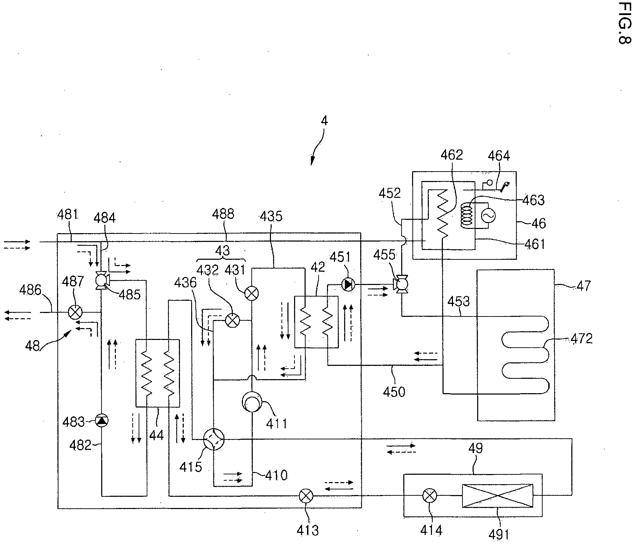

Fig. 8 is a schematic view illustrating a hot water supply device associated with a heat pump, according to the fourth embodiment.

Referring to FIG. 8, a hot water supply part 46 and a bottom heating/cooling part 47 are provided using a desuperheater method. Thus, an usage heat exchanger is used as a primary condenser in which the refrigerant at a discharge side of a compressor is primarily condensed, and any one of an air-conditioning heat exchanger and a heat source side heat exchanger is used as a secondary condenser in which the refrigerant at the discharge side of the compressor is secondarily used.

In detail, in the current embodiment, a main refrigerant pipe 410 connecting a compressor 411, an air-conditioning heat exchanger 431, an expander 413, and a heat source side heat exchanger 44 to form a refrigerant cycle, an usage side refrigerant pipe 435 guiding refrigerant discharged from the compressor 411 to an usage side heat exchanger 42, and a bypass refrigerant pipe 436 guiding the refrigerant discharged from the compressor 411 to bypass the usage side heat exchanger 42 are provided.

In the current embodiment, a flow rate adjustment part 43 for adjusting the amount of the refrigerant discharged from the compressor 411 and introduced to the usage side heat exchanger 42, and the amount of the refrigerant introduced to the air-conditioning heat exchanger 491 is further provided. In more detail, the flow rate adjustment part 43 includes an usage side flow rate adjustment part 431 adjusting the amount of refrigerant introduced from the compressor 411 to the usage side heat exchanger 42, and a bypass flow rate adjustment part 432 adjusting the amount of refrigerant introduced from the compressor 411 and bypassing the usage side heat exchanger 42. The usage side flow rate adjustment part 431 is installed at a side of the usage side refrigerant pipe 435, and the bypass flow rate adjustment part 432 is installed at a side of the bypass refrigerant pipe 436.

The usage side heat exchanger 42 is installed between the compressor 411 and the flow switch part 415 on the refrigerant cycle to use the usage side heat exchanger 42 as a primary condenser regardless of switching between heating and cooling. Thus, since the discharge side refrigerant of the compressor 411 having the maximum temperature on the refrigerant cycle is introduced directly to the usage side heat exchanger 42, the hot water supply performance can be further improved.

In more detail, the refrigerant discharged from the compressor 411 can be introduced directly to the usage side heat exchanger 42 first. In this case, the usage side flow rate adjustment part 431 is at least partially opened. The refrigerant primarily condensed by passing through the usage side heat exchanger 42 and heating the usage side water can be introduced to the air-conditioning heat exchanger 491 or the heat source side heat exchanger 44. The refrigerant passing through the usage side heat exchanger 42 is introduced to the air-conditioning heat exchanger 491 in the heating operation, and the refrigerant passing through the usage side heat exchanger 42 is introduced to the heat source side heat exchanger 44 in the cooling operation. Thus, the refrigerant primarily condensed in the usage side heat exchanger 42 is secondarily condensed in the air-conditioning heat exchanger 491 in the heating operation, and the refrigerant primarily condensed in the usage side heat exchanger 42 is secondarily condensed in the heat source side heat exchanger 44 in the cooling operation. That is, the usage side heat exchanger 42 is used as a primary condenser and the air-conditioning heat exchanger 491 is used as a secondary condenser in the heating operation, and the usage side heat exchanger 42 is used as a primary condenser and the heat source side heat exchanger 44 is used as a secondary condenser in the cooling operation. Regardless of switching between heating and cooling, since the discharge side refrigerant of the compressor 411 having the maximum temperature on the refrigerant cycle is introduced directly to the usage side heat exchanger 42, the hot water supply performance can be further improved.

A bottom heat exchanger 472 and the air-conditioning heat exchanger 491 may be installed separately. In detail, the bottom heat exchanger 472 is connected to the usage side heat exchanger 42 such that the usage side water passing through the usage side heat exchanger 42 flows, and the air-conditioning heat exchanger 491 is connected to the main refrigerant pipe 410 to use the refrigerant discharged from the compressor 411 to heat or cool the indoor air.

The amount of refrigerant introduced to a hot water supply heat exchanger 462 and the amount of refrigerant bypassing the hot water supply heat exchanger 462 can be adjusted according to a hot water supply load and a heating/cooling load. For example, when the hot water supply load is greater than the heating/cooling load, the amount of refrigerant introduced to the usage side heat exchanger 42 can be controlled to be increased, and the amount of refrigerant bypassing the usage side heat exchanger 42 can be controlled to be decreased. In addition, when the heating/cooling load is greater than the hot water supply load, the amount of refrigerant introduced to the usage side heat exchanger 42 can be controlled to be decreased, and the amount of refrigerant bypassing the usage side heat exchanger 42 can be controlled to be increased.

The hot water supply load may be a difference between a water discharge temperature of the hot water supply part 46 and a target temperature thereof, and the heating/cooling load may be a difference between the temperature of an indoor space, which is a heating/cooling target of the air-conditioning heat exchanger 491, and a target temperature of the indoor space.

According to the current embodiment, regardless of heating or cooling of the indoor space, the hot water supply operation can be continuously performed. The usage side heat exchanger 42 is installed between the compressor 411 and the flow switch part 415 on the refrigerant cycle. Thus, when a hot water supply device 4 associated with a heat pump, according to the current embodiment, is in the heating operation, the refrigerant discharged from the compressor 411 simultaneously passes through the usage side heat exchanger 42 and the air-conditioning heat exchanger 491, so as to simultaneously perform the hot water supply operation and the indoor heating operation. In addition, when the hot water supply device 4 is in the cooling operation, the refrigerant discharged from the compressor 411 simultaneously passes sequentially through the usage side heat exchanger 42, the heat source side heat exchanger 44, and the usage side heat exchanger 42, so as to simultaneously perform the hot water supply operation and the indoor cooling heating operation. Thus, the hot water supply operation can be continuously performed regardless of switching between heating and cooling. In this case, the water at the usage side circulates through the hot water supply heat exchanger 462 and the usage side heat exchanger 42.

According to the current embodiment, the hot water supply operation and the heating/cooling operation can be simultaneously performed. In more detail, the refrigerant discharged from the compressor 411 passes sequentially through the usage side heat exchanger 42, the air-conditioning heat exchanger 491, the expander 413, and the heat source side heat exchanger 44, so as to simultaneously perform the hot water supply operation and the heating operation. In addition, the refrigerant discharged from the compressor 411 passes sequentially through the usage side heat exchanger 42, the heat source side heat exchanger 44, the expander 413, and the air-conditioning heat exchanger 491, so as to simultaneously perform the hot water supply operation and the cooling operation.

According to the current embodiment, an operation state of the hot water supply device 4 can be optimized according to the hot water supply load and the heating/cooling load. In detail, when the hot water supply operation and the heating/cooling operation are simultaneously performed, the amount of hot water supply side refrigerant flowing through the usage side heat exchanger 42 and the amount of heating/cooling side refrigerant bypassing the usage side heat exchanger 42 and flowing directly to the air-conditioning heat exchanger 491 or the heat source side heat exchanger 44 can be adjusted according to the hot water supply load and the heating/cooling load.

In more detail, when the hot water supply load is greater than the heating/cooling load, the amount of refrigerant passing through the usage side heat exchanger 42 increases, that is, the amount of heat transmitted to water of a hot water supply tank 461 through the hot water supply heat exchanger 462 increases, a hot water supply target condition can be achieved more quickly. In addition, when the heating/cooling load is greater than the hot water supply load, the amount of refrigerant bypassing the usage side heat exchanger 42 increases, and thus, the amount of refrigerant discharged from the compressor 411 and introduced directly to the air-conditioning heat exchanger 491 increases in the heating operation. Thus, the amount of heat transmitted to the indoor space through the air-conditioning heat exchanger 491 increases to further improve the heating performance. Thus, the operation state of the hot water supply device 4 can be optimized according to the hot water supply load, that is, operation conditions.

Hereinafter, a hot water supply device associated with a heat pump will be described in detail with reference to the accompanying drawings, according to a fifth embodiment. The current embodiment is different from the first embodiment in that a vapor refrigerant of refrigerants condensed on a refrigerant cycle is injected to a compressor. In the current embodiment, a description of the same configuration as that of the first embodiment will be omitted.

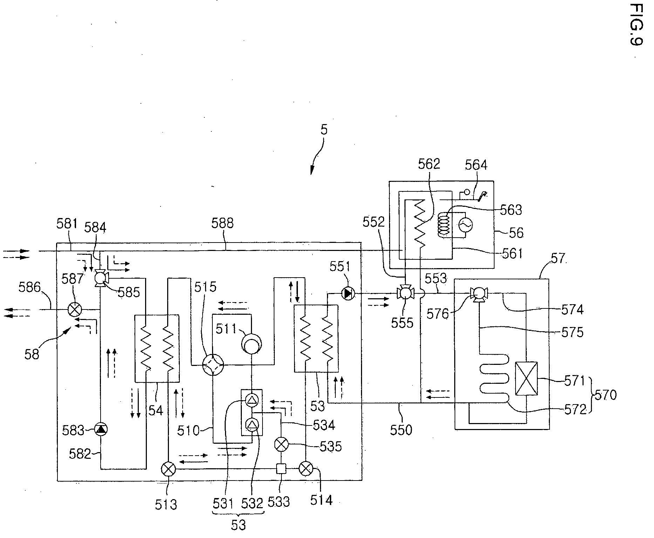

Fig. 9 is a schematic view illustrating a hot water supply device associated with a heat pump, according to the fifth embodiment.

Referring to FIG. 9, in the current embodiment, a vapor refrigerant of refrigerants condensed on a refrigerant cycle is injected to a compressors 53.

In detail, the compressor 53 is configured as a multi-stage compressor 53 that includes a low stage compression part 532 primarily compressing refrigerant and a middle compression part 531 secondarily compressing the refrigerant compressed in the low stage compression part 532.

In the current embodiment, a phase divider 533 dividing the refrigerant condensed in a usage side heat exchanger 52 or a heat source side heat exchanger 54 on the refrigerant cycle to a vapor refrigerant and a liquid refrigerant, and an injection pipe 534 for injecting the vapor refrigerant obtained at the phase divider 533 to the middle compression part 531 of the compressor 53 are provided.

A first expander 513 and a second expander 514 are disposed at both sides of the phase divider 533 on the refrigerant cycle.

According to the current embodiment, in a heating operation, the refrigerant flowing between the usage side heat exchanger 52 and the heat source side heat exchanger 54 can be injected to the compressor 53, and thus, the amount of refrigerant flowing to the usage side heat exchanger 52 increases to further improve the hot water supply and heating performances. Especially, although an evaporation heat amount of the refrigerant may decrease in the heat source side heat exchanger 54 to degrade the entire heating performance when the temperature of the heat source side water is relatively low, the refrigerant is injected as described above to improve the heating performance.

An injection valve selectively closes the injection pipe 534 to selectively inject the refrigerant to the compressor 53 according to outside temperatures. For example, when the heat source side water, that is, circulation water has a temperature that is a reference temperature or greater, the injection valve 535 can be controlled to be continually closed, and, when the heat source side water has a temperature that is less than the reference temperature, the injection valve 535 can be controlled to be continually opened.

Hereinafter, a hot water supply device associated with a heat pump will be described in detail with reference to the accompanying drawings, according to a sixth embodiment. The current embodiment is different from the first embodiment in that a hot water supply device associated with a heat pump is configured as a multi-system including a plurality of hot water supply parts and a plurality of heating/cooling parts. In the current embodiment, a description of the same configuration as that of the first embodiment will be omitted.

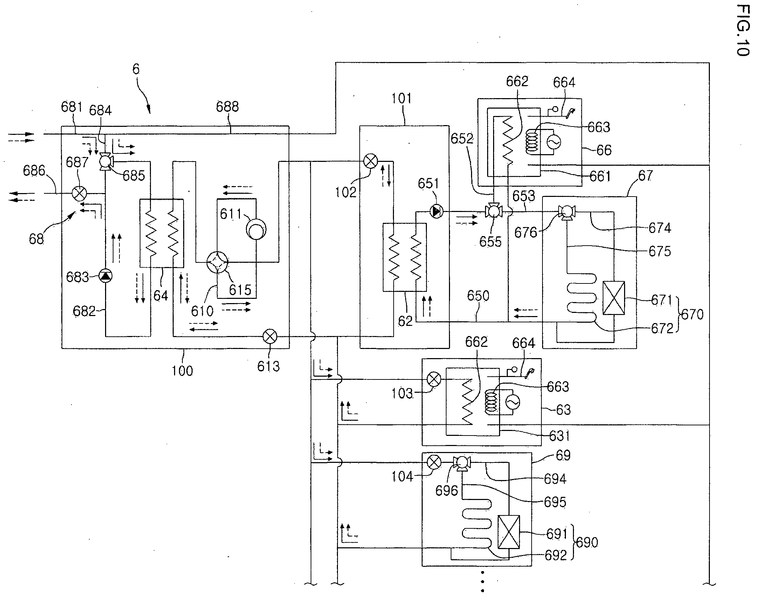

Fig. 10 is a schematic view illustrating a hot water supply device associated with a heat pump, according to the sixth embodiment.

Referring to FIG. 10, a hot water supply device associated with a heat pump, according to the current embodiment, is configured as a multi-system including a plurality of hot water supply parts 63 and 66 and a plurality of heating/cooling parts 67 and 69. That is, a single heat pump 100 can be used to perform a hot water supply operation of the hot water supply parts 63 and 66 and a heating/cooling operation of the heating/cooling parts 67 and 69.

In detail, the hot water supply device according to the current embodiment includes the heat pump 100 in which heat source side water is heat-exchanged with refrigerant, a relay 101 in which usage side water is heat-exchanged with the refrigerant disposed from the heat pump 100, a first hot water supply part 66 using water discharged from the relay 101 to perform a hot water supply operation, a first heating/cooling part 67 using water discharged from the relay 101 to heat and cool an indoor space, a second hot water supply part 63 using the refrigerant discharged from the heat pump 100 to perform a hot water supply operation, a second heating/cooling part 69 using the refrigerant discharged from the heat pump 100 to heat and cool the indoor space. In detail, the hot water supply device according to the eighth embodiment includes the heat pump 80 in which heat source side water is heat-exchanged with second refrigerant, a relay 804 in which usage side water is heat-exchanged with the second refrigerant disposed from the heat pump 100, a first hot water supply part 66 using water discharged from the relay 101 to perform a hot water supply operation, a first heating/cooling part 67 using water discharged from the relay 101 to heat and cool an indoor space, a second hot water supply part 87 using the second refrigerant discharged from the heat pump 100 to perform a hot water supply operation, a second heating/cooling part 69 using the second refrigerant discharged from the heat pump 100 to heat and cool the indoor space.

The heat pump 100 and the relay 101 are connected to a refrigerant pipe 610, and the first hot water supply part 66 and the first heating/cooling part 67 are connected through a water pipe 650 to the relay 101. That is, the first hot water supply part 66 and the first heating/cooling part 67 are indirectly connected to the heat pump 100 through the relay 101. The second hot water supply part 63 and the second heating/cooling part 69 are directly connected to the heat pump 100 through the refrigerant pipe 610. At this point, the relay 101, the second hot water supply part 63, and the second heating/cooling part 69 are connected to the heat pump 100 in parallel. That is, the refrigerant discharged from the heat pump 100 may be distributed to the relay 101, the second hot water supply part 63, and the second heating/cooling part 69 to flow.

The usage side water is heat-exchanged with water of a hot water supply tank 661 in a hot water supply heat exchanger 662 of the first hot water supply part 66, and the refrigerant is heat-exchanged with water of a hot water supply tank 631 in a hot water supply heat exchanger 632 of the second hot water supply part 63.

Thus, the first hot water supply part 66 and the first heating/cooling part 67 indirectly receive, through the usage side water, heat from the refrigerant heated by the heat source side water, and the second hot water supply part 63 and the second heating/cooling part 69 directly receives heat from the refrigerant heated by the heat source side water.

A hot water supply side supply passage 688 is connected to the hot water supply tank 661 of the first hot water supply part 66 and the hot water supply tank 631 of the second hot water supply part 63, so that water can be continually supplied to the hot water supply tanks 631 and 661 of the first and second hot water supply parts 66 and 63.

The refrigerant pipe 610 connected to the relay 101, the second hot water supply part 69, and the second heating/cooling part 88 is provided with flow rate adjustment parts 102, 103, and 104 corresponding respectively to the relay 101, the second hot water supply part 63, and the second heating/cooling part 69, so that the amount of refrigerant introduced to the relay 101, the second hot water supply part 63, and the second heating/cooling part 69 can be adjusted. The amount of refrigerant introduced to the relay 101, the second hot water supply part 63, and the second heating/cooling part 69 can be adjusted according to hot water supply loads and heating/cooling loads of the first hot water supply part 66, the first heating/cooling part 67, the second hot water supply part 63, and the second heating/cooling part 69.

According to the current embodiment, the single heat pump 100 can be used to perform a hot water supply operation and a heating/cooling operation on a plurality of places. For example, the first hot water supply part 66 and the first heating/cooling part 67 are installed at a first usage place, and the second hot water supply part 63 and the second heating/cooling part 69 are installed at a second usage place, so that a hot water supply operation and a heating/cooling operation can be simultaneously or selectively performed on the first and second usage places.

## Claims

1. A hot water supply device (1) with a heat pump, comprising:
a main refrigerant circuit including a compressor (111) compressing refrigerant, an expander (113), and a first water-refrigerant heat exchanger (14) in which heat is exchanged between the refrigerant and water supplied from a water supply source; a heating/cooling part (17)including an air-conditioning heat exchanger (171) through which circulation water circulates; a hot water supply part (16) including a hot water supply heat exchanger (162) in which heat is exchanged between the water supplied from the water supply source and the circulation water; a second water-refrigerant heat exchanger (12) in which heat is exchanged between the refrigerant and circulation water, and
wherein the hot water supply device further comprises: a three-way valve (155) switching a flow direction of the circulation water passing through the second water-refrigerant heat exchanger (12) to the hot water supply part (16) or the heating/cooling part (17);
a water supply passage (181) to receive water from the water supply source;
a hot water supply side passage (188) connecting the water supply passage (181) to the hot water supply part (16) to supply water from the water supply source to the hot water supply part (16);
a circulation passage (182) in which water to be heat-exchanged with the refrigerant in the first water-refrigerant heat exchanger (14) circulates;
a circulation side supply passage (184) connected to the water supply passage (181) and extending to the circulation passage (182) so as to supply the water in the water supply passage (181) to the circulation passage (182); and
a water supply adjustment part (185) installed on the circulation side supply passage (184) to selectively prevent a water supply through the circulation side supply passage (184), and
wherein the refrigerant flowing through the second water-refrigerant heat exchanger (12) and the first water-refigerant heat exchanger (14) are heat-exchanged with water, and
wherein the main refrigerant circuit further comprises a flow switch part (115) switching a flow direction of a refrigerant discharged from the compressor (111) to one of the first and the second water-refrigerant heat exchanger (14, 12).

2. The hot water supply device according to claim 1, wherein the compressor is provided as a multi-stage compressor including a low stage compression part and a middle compression part in which a refrigerant passing through the low stage compression part is compressed,
further comprising:
a phase divider (533) dividing the refrigerant condensed on the main refrigerant circuit into a vapor refrigerant and a liquid refrigerant; and
an injection pipe (534) guiding the vapor refrigerant divided in the phase divider to the middle compression part.

3. The hot water supply device according claim 1 or 2, further comprising:
a pump (183) installed on the circulation passage (182) and forcibly moving the water of the circulation passage.

4. The hot water supply device according to claim 3, wherein the pump operates such that the water circulates through the circulation passage when a temperature of the water circulating through the circulation passage is equal to or less than a freezing and bursting reference temperature to prevent freezing and bursting of the water supply part.

5. The hot water supply device according to claim 3 or 4, further comprising:
a circulation side discharge passage (186) for discharging the water circulating through the circulation passage; and
a water discharge adjustment part (187) selectively preventing the discharging of the water through the circulation side discharge passage.

6. The hot water supply device according to any of claims 3 to 5, wherein the pump stops such that supplying and discharging of the water of the circulation passage are prevented when a temperature of the water of the circulation passage is greater than a circulation reference temperature, to save the water circulating through the circulation passage, and
the pump operates such that the water of the circulation passage is supplied and discharged when the temperature of the water of the circulation passage is equal to or less than the circulation reference temperature.

7. The hot water supply device according to any of the preceeding claims, wherein the hot water supply part (16) further includes:
a hot water supply tank (161) in which water to be supplied as hot water is stored; and
a water discharge passage to supply the water of the hot water supply tank (161) as hot water, and
wherein the water stored in the hot water supply tank and the water flowing through the first water-refrigerant heat exchanger (14) are supplied from the water supply source.

## Patentansprüche

1. Heißwasserversorgungsvorrichtung (1) mit einer Wärmepumpe, wobei die Heißwasserversorgungsvorrichtung aufweist:
einen Kältemittel-Hauptkreislauf, der einen Kältemittel komprimierenden Kompressor (111), einen Expander (113) und einen ersten Wasser/Kältemittel-Wärmetauscher (14) aufweist, in welchem ein Wärmeaustausch zwischen dem Kältemittel und aus einer Wasserversorgungsquelle zugeführtem Wasser stattfindet;
einen Heiz/Kühl-Abschnitt (17) mit einem Klimatisierung-Wärmetauscher (171), durch welchen Zirkulationswasser zirkuliert;
einen Heißwasserversorgungsabschnitt (16) mit einem Heißwasserversorgung-Wärmetauscher (162), in welchem ein Wärmeaustausch zwischen dem aus der Wasserversorgungsquelle zugeführtem Wasser und dem Zirkulationswasser stattfindet;
einen zweiten Wasser/Kältemittel-Wärmetauscher (12), in welchem ein Wärmeaustausch zwischen dem Kältemittel und dem Zirkulationswasser stattfindet, und
die Heißwasserversorgungsvorrichtung außerdem aufweist:
ein Dreiwegeventil (155), das eine Fließrichtung des Zirkulationswassers, das durch den zweiten Wasser/Kältemittel-Wassertauscher (12) geströmt ist, entweder zu dem Heißwasserversorgungsabschnitt (16) oder zu dem Heiz/Kühl-Abschnitt (17) umschaltet;
einen Wasserversorgungskanal (181) zum Empfangen von Wasser aus der Wasserversorgungsquelle;
einen Heißwasserversorgung-Seitenkanal (188), der den Wasserversorgungskanal (181) mit dem Heißwasserversorgungsabschnitt (16) verbindet, um dem Heißwasserversorgungsabschnitt (16) Wasser aus der Wasserversorgungsquelle zuzuführen;
einen Zirkulationskanal (182), in welchem Wasser zirkuliert, das in dem ersten Wasser/Kältemittel-Wärmetauscher (14) einem Wärmeaustausch mit dem Kältemittel unterzogen werden soll;
einen Zirkulationsseitenversorgungskanal (184), der mit dem Wasserversorgungskanal (181) verbunden ist und sich zu dem Zirkulationskanal (182) erstreckt, um dem Zirkulationskanal (182) Wasser aus dem Wasserversorgungskanal (181) zuzuführen; und
einen Wasserzufuhr-Anpassungsabschnitt (185), der an dem Zirkulationsseitenversorgungskanal (184) angeordnet ist, um eine Zufuhr von Wasser durch den Zirkulationsseitenversorgungskanal (184) selektiv zu verhindern, und
wobei das durch den zweiten Wasser/Kältemittel-Wärmetauscher (12) und den ersten Wasser/Kältemittel-Wärmetauscher (14) strömende Kältemittel einem Wärmeaustausch mit dem Wasser unterzogen wird, und
wobei der Kältemittel-Hauptkreislauf außerdem einen Fließrichtung-Umschaltabschnitt (115) aufweist, der eine Fließrichtung eines aus dem Kompressor (111) strömenden Kältemittels entweder zu dem ersten oder zu dem zweiten Wasser/Kältemittel-Wärmetauscher (14, 12) umschaltet.

2. Heißwasserversorgungsvorrichtung nach Anspruch 1, wobei der Kompressor als ein mehrstufiger Kompressor bereitgestellt ist, der einen Niederkompressionsteil und einen Mittelkompressionsteil aufweist, in welchem ein Kältemittel, nachdem es durch den Niederkompressionsteil geströmt ist, komprimiert wird,
ferner mit:
einem Phasenseparator (533), der das in dem Kältemittel-Hauptkreislauf kondensierte Kältemittel in einen Kältemitteldampf und eine Kältemittelflüssigkeit scheidet; und
einem Injektionsrohr (534), das den in dem Phasenseparator abgeschiedenen Kältemitteldampf in den Mittelkompressionsteil leitet.

3. Heißwasserversorgungsvorrichtung nach Anspruch 1 oder 2, ferner mit:
einer Pumpe (183), die an dem Zirkulationskanal (182) angeordnet ist und das Wasser des Zirkulationskanals unter Zwang bewegt (zwangsumwälzt).

4. Heißwasserversorgungsvorrichtung nach Anspruch 3, wobei in dem Fall, dass eine Temperatur des durch den Zirkulationskanal zirkulierenden Wassers gleich oder niedriger als eine Gefrier- und Berst-Referenztemperatur ist, die Pumpe eingeschaltet ist, so dass Wasser durch den Zirkulationskanal zirkuliert, um Gefrieren oder Bersten des Wasserversorgungsabschnitts zu verhindern.

5. Heißwasserversorgungsvorrichtung nach Anspruch 3 oder 4, ferner mit:
einem Zirkulationsseitenablasskanal (186) zum Ablassen des durch den Zirkulationskanal fließenden Wassers; und
einem Wasserablass-Anpassungsteil (187), um ein Ablassen des Wassers über den Zirkulationsseitenablasskanal selektiv zu verhindern.

6. Heißwasserversorgungsvorrichtung nach einem der Ansprüche 3 bis 5, wobei
in dem Fall, dass eine Temperatur des Wassers des Zirkulationskanals höher als eine Zirkulationsreferenztemperatur ist, die Pumpe abgeschaltet ist, so dass Zuführen und Ablassen von Wasser des Zirkulationskanals unterdrückt sind, um eine Einsparung von durch den Zirkulationskanal zirkulierendem Wasser zu erlauben, und
in dem Fall, dass die Temperatur des Wassers des Zirkulationskanals gleich oder niedriger als die Zirkulationsreferenztemperatur ist, die Pumpe eingeschaltet ist, so dass Zuführen und Ablassen von Wasser des Zirkulationskanals erlaubt sind.

7. Heißwasserversorgungsvorrichtung nach einem der vorstehenden Ansprüche, wobei der Heißwasserversorgungsabschnitt (16) außerdem aufweist:
einen Heißwasservorratsbehälter (161), in welchem als Heißwasser bereitzustellendes Wasser gespeichert wird; und
eine Wasserabgabeleitung, um Wasser des Heißwasservorratsbehälters (161) als Heißwasser bereitzustellen, und
wobei das in dem Heißwasservorratsbehälter gespeicherte Wasser und das durch den ersten Wasser/Kältemittel-Wärmetauscher fließende Wasser (14) aus der Wasserversorgungsquelle zugeführt werden.

## Revendications

1. Dispositif d'alimentation en eau chaude (1) doté d'une pompe à chaleur, comprenant :
un circuit de fluide frigorigène principal incluant un compresseur (111) comprimant un fluide frigorigène, un détendeur (113) et un premier échangeur de chaleur eau-fluide frigorigène (14) dans lequel la chaleur est échangée entre le fluide frigorigène et l'eau apportée depuis une source d'alimentation en eau ; une partie de chauffage/refroidissement (17) incluant un échangeur de chaleur à conditionnement d'air (171) à travers lequel circule de l'eau de circulation ; une partie d'alimentation en eau chaude (16) incluant un échangeur de chaleur à alimentation en eau chaude (162) dans lequel la chaleur est échangée entre l'eau apportée depuis la source d'alimentation en eau et l'eau de circulation ; un deuxième échangeur de chaleur eau-fluide frigorigène (12) dans lequel la chaleur est échangée entre le fluide frigorigène et l'eau de circulation, et
dans lequel le dispositif d'alimentation en eau chaude comprend en outre :
une vanne trois voies (155) commutant une direction d'écoulement de l'eau de circulation traversant le deuxième échangeur de chaleur eau-fluide frigorigène (12) vers la partie d'alimentation en eau chaude (16) ou la partie de chauffage/refroidissement (17) ;
un passage d'alimentation en eau (181) pour recevoir l'eau provenant de la source d'alimentation en eau ;
un passage côté alimentation en eau chaude (188) raccordant le passage d'alimentation en eau (181) à la partie d'alimentation en eau chaude (16) pour apporter l'eau depuis la source d'alimentation en eau jusqu'à la partie d'alimentation en eau chaude (16) ;
un passage de circulation (182) dans lequel circule l'eau devant subir un échange de chaleur avec le fluide frigorigène dans le premier échangeur de chaleur eau-fluide frigorigène (14) ;
un passage d'alimentation côté circulation (184) raccordé au passage d'alimentation en eau (181) et s'étendant jusqu'au passage de circulation (182) de manière à apporter l'eau dans le passage d'alimentation en eau (181) jusqu'au passage de circulation (182) ; et
une partie d'ajustement d'alimentation en eau (185) installée sur le passage d'alimentation côté circulation (184) pour empêcher sélectivement une alimentation en eau à travers le passage d'alimentation côté circulation (184), et
dans lequel le fluide frigorigène s'écoulant à travers le deuxième échangeur de chaleur eau-fluide frigorigène (12) et le premier échangeur de chaleur eau-fluide frigorigène (14) subit un échange de chaleur avec l'eau, et
dans lequel le circuit de fluide frigorigène principal comprend en outre une partie de commutation d'écoulement (115) commutant une direction d'écoulement d'un fluide frigorigène déchargé du compresseur (111) vers l'un des premier et deuxième échangeurs de chaleur eau-fluide frigorigène (14, 12).

2. Dispositif d'alimentation en eau chaude selon la revendication 1, dans lequel le compresseur se présente comme un compresseur à étages multiples incluant une partie de compression d'étage bas et une partie de compression intermédiaire dans laquelle un fluide frigorigène traversant la partie de compression d'étage bas est comprimé,
comprenant en outre :
un séparateur de phase (533) séparant le fluide frigorigène condensé sur le circuit de fluide frigorigène principal en un fluide frigorigène sous forme vapeur et en un fluide frigorigène sous forme liquide ; et
un tuyau d'injection (534) guidant le fluide frigorigène sous forme vapeur séparé dans le séparateur de phase vers la partie de compression intermédiaire.

3. Dispositif d'alimentation en eau chaude selon la revendication 1 ou 2, comprenant en outre :
une pompe (183) installée sur le passage de circulation (182) et déplaçant de force l'eau du passage de circulation.

4. Dispositif d'alimentation en eau chaude selon la revendication 3, dans lequel la pompe fonctionne de telle sorte que l'eau circule à travers le passage de circulation quand une température de l'eau circulant à travers le passage de circulation est égale ou inférieure à une température de référence de gel et d'éclatement afin d'empêcher le gel et l'éclatement de la partie d'alimentation en eau.

5. Dispositif d'alimentation en eau chaude selon la revendication 3 ou 4, comprenant en outre :
un passage de décharge côté circulation (186) pour décharger l'eau circulant à travers le passage de circulation ; et
une partie d'ajustement de décharge d'eau (187) empêchant sélectivement la décharge de l'eau à travers le passage de décharge côté circulation.

6. Dispositif d'alimentation en eau chaude selon l'une quelconque des revendications 3 à 5, dans lequel la pompe s'arrête de telle sorte que l'alimentation et la décharge de l'eau du passage de circulation sont évitées quand une température de l'eau du passage de circulation est supérieure à une température de référence de circulation, afin d'économiser l'eau circulant à travers le passage de circulation, et
la pompe fonctionne de telle sorte que l'eau du passage de circulation est apportée et déchargée quand la température de l'eau du passage de circulation est égale ou inférieure à la température de référence de circulation.

7. Dispositif d'alimentation en eau chaude selon l'une quelconque des revendications précédentes, dans lequel la partie d'alimentation en eau chaude (16) inclut en outre :
un réservoir d'alimentation en eau chaude (161) dans lequel est stockée de l'eau à apporter en tant qu'eau chaude ; et
un passage de décharge d'eau pour apporter l'eau du réservoir d'alimentation en eau chaude (161) en tant qu'eau chaude, et
dans lequel l'eau stockée dans le réservoir d'alimentation en eau chaude et l'eau s'écoulant à travers le premier échangeur de chaleur eau-fluide frigorigène (14) sont apportées depuis la source d'alimentation en eau.
